(19) Europäisches Patentamt
European Patent Office
Office européen des brevets

(11) **EP 2 469 758 A1**

(12) **EUROPEAN PATENT APPLICATION**

(43) Date of publication:
**27.06.2012 Bulletin 2012/26**

(51) Int Cl.:
***H04L 12/24*** (2006.01)     ***H04L 12/56*** (2006.01)

(21) Application number: **10252233.1**

(22) Date of filing: **24.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **British Telecommunications Public Limited Company**
**London EC1A 7AJ (GB)**

(72) Inventor: **The designation of the inventor has not yet been filed**

(74) Representative: **Lidbetter, Timothy Guy Edwin**
**BT Group Legal**
**Intellectual Property Department**
**PP C5A, BT Centre**
**81 Newgate Street**
**London**
**EC1A 7AJ (GB)**

(54) **Communications network management**

(57)     The present invention provides a communications network which is divided into a plurality of segments, with each segment comprising one or more routers and one or more communications links that connect the routers. Quality of service (QoS) thresholds can be defined for each of the segments and if it is predicted that one of these thresholds is to be breached in one of the segments, for example due to a communications link or a router being overloaded, then a segment management module associated with that segment will re-route the traffic.

Figure 2

**Description**

The present invention relates to the operation of communications networks and in particular to the autonomic operation of communications networks.

It will be understood that there are a number of different approaches to network capacity management for communications networks. If the network is yet to be built, then over-provisioning is the easiest method. Network capacity can be determined on the basis of network demands forecasts and modelling, with the expectation that the demand placed upon the network does not exceed the provisioned limit. The process of putting in more capacity once this limit has been exceeded is laborious and might even require engineers to lay more cable and connect them back into the network. Evidently, this method is very static.

Alternatively, once a network becomes overloaded, services undergo admission control at the edge of a congested network based on current availability in the network to accommodate the incoming new flow. This technique is as old as the Public Switched Telephone Network (PSTN) and has been implemented using logical units such as Bandwidth Brokers and protocols such as RSVP (within the Integrated Services framework). Traditional call admission only looks at allowing a service/flow access into the network. It does not address the problem of gradual underperformance of a service while being assigned to a specific sequence of resources. This becomes increasingly important when the number of services delivered on the IP networks and the variety in the Quality of Service guarantees they require expands with the introduction of TV and gaming content from numerous content providers. However, RFC 2638 states, "If the deployment of Differentiated Services has advanced to the stage where dynamically allocated, marked flows are possible between two adjacent domains, [bandwidth brokers] also provide the hook needed to implement this."; yet, precisely what is "dynamically allocated" for a given flow or a class of service and whether this includes dynamically changing resources for an already established session is not clarified and importantly, a method or an architecture to achieve this has not been made clear.

According to a first aspect of the present invention there is provided a communications network, the communications network being partitioned into a plurality of network segments, each of the plurality of the network segments comprising a segment management module, a plurality of network elements and a plurality of communications links, the plurality of network elements being interconnected by the plurality of communications links, the network being configured such that, in operation: i) each of the segment management modules receives operational data from the plurality of network elements in its respective network segment; ii) on the basis of operational data received from the plurality of network elements, each segment management module determines the future performance of the plurality of network elements in the respective network segment; and iii) if a segment management module determines that the future performance of one or more of the plurality of network elements in the respective network segment will be less than a threshold value, re-routing one or more data flows.

According to a second aspect of the present invention there is provided method of operating a communications network, wherein the communications network is partitioned into a plurality of network segments, each of the plurality of the network segments comprising a segment management module, a plurality of network elements and a plurality of communications links, the plurality of network elements being interconnected by the plurality of communications links, the method comprising the steps of: a) each of the segment management modules receiving operational data from the plurality of network elements in its respective network segment; b) each segment management module determining, on the basis of operational data received from the plurality of network elements, the future performance of the plurality of network elements in the respective network segment; and c) if a segment management module determines that the future performance of one or more of the plurality of network elements in the respective network segment will be less than a threshold value, re-routing one or more data flows.

According to a third aspect of the present invention there is provided a data carrier device comprising computer executable code for performing a method as described above.

Load balancing for selected services can thus be achieved by altering the MPLS label rather altering IP routing tables, yet the decision regarding which MPLS labels to alter is derived by combining link information from the IP routing table, current network loads on the proposed next best hop, and learning about historical performance of a proposed next best hop. Therefore, the same proposed next best hop learned from an IP routing table may not lead to the same MPLS label alteration every time and this mapping process is not trivial.

Embodiments of the present invention will now be described, by way of example only, with reference to the accompanying drawings in which:

Figure 1 shows a schematic depiction of a communications network which comprises a plurality of different network segments;
Figure 2 shows a schematic depiction of a network segment;
Figure 3 shows a schematic depiction of an example of a segmented network;
Figure 4 shows a schematic depiction of a flowchart which describes an example of a method according to the present invention; and
Figure 5 shows a schematic depiction of a network segment management module.

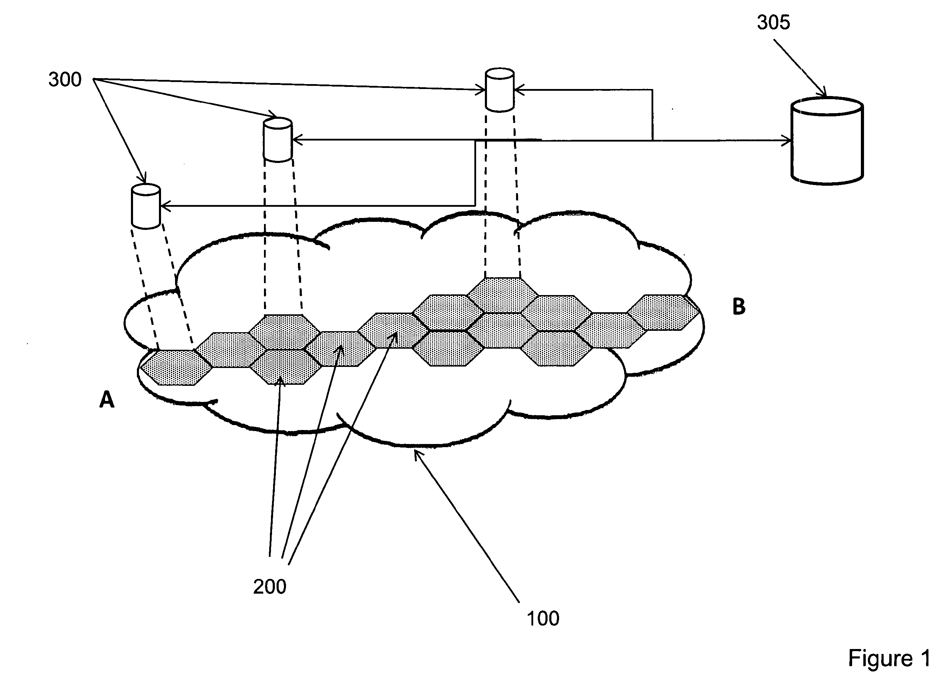

Figure 1 shows a schematic depiction of a communications network 100. A path across the communications network 100, for example between points A and B, can be considered to be comprised of a plurality of different network segments 200. Each of the plurality of network segments 200 is associated with a respective network segment management module 300. For the sake of clarity Figure 1 shows only a subset of the plurality of network segments which lie on or near to an approximate route from point A to point B across the network. It will be understood that the network can be considered to comprise more network segments than are shown in Figure 1. Furthermore, only some of the plurality of network segment management modules 300 are shown in Figure 1.

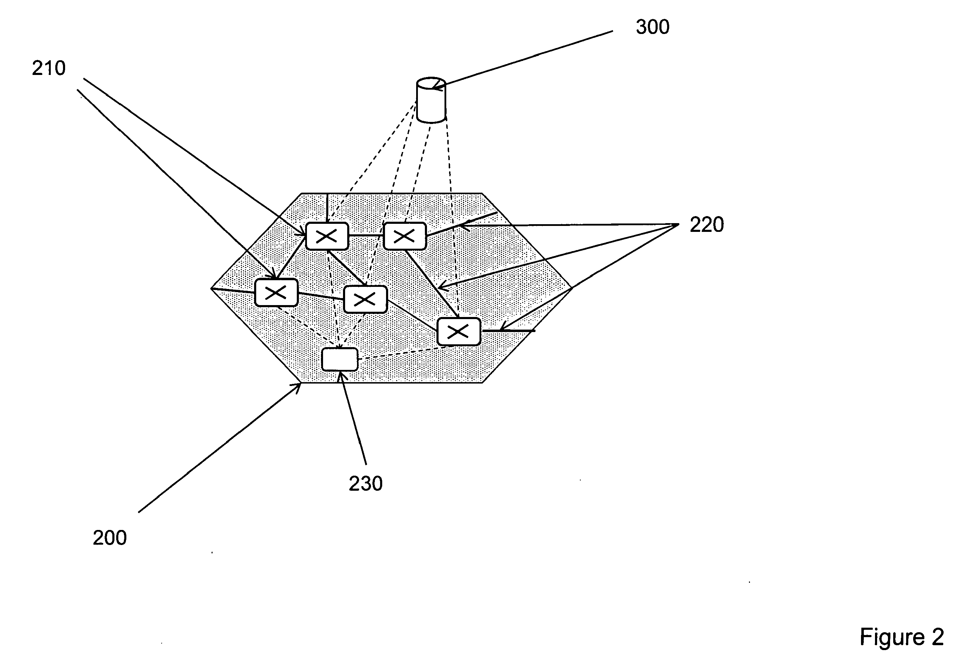

Figure 2 shows a schematic depiction of one of the plurality of network segments 200 which comprises one or more network routers 210 and one or more communications links 220 . The communications links 220 interconnect the network routers 210 within the network segment 200 and also provide connections outside the network segment, for example to network routers within other network segments or to destinations at the edge of the network, for example points A or B. These destinations at the edge of the network may comprise a node that is generating or receiving data or a gateway to further networks. A network segment may also comprise other elements such as switches, bridges, etc.

Referring to Figure 1, consider a flow of traffic from Point A to Point B when the network is only lightly loaded. While standard Internet Protocols provide no guarantee that the end-to-end pathway of two consecutive packets will be the same, a change is only likely to occur if the state of a link or router changes or if a link is being overloaded such that the QoS parameters are exceeding acceptable limits. Therefore, assuming that the network begins in a stable condition then it follows that it is reasonable to assume that at least some consecutive packets will follow the same pathway across the network between Points A and B. As can be seen from Figure 1, the communications network 100 is divided into a number of network segments. A route between endpoints A and B is likely to pass through a set of the shaded segments that are shown in Figure 1. It is possible to define a set of quality of service (QoS) parameters and associated parameter limits that are valid for the end-to-end path across the network from A to B. For example the set of QoS parameters, $P$, may be defined as:

$$P = \{\text{delay, jitter, loss}\} \qquad\qquad [1]$$

but it will be understood that other parameters may be used in addition, or in the alternative. If the values of these QoS parameters exceed predetermined values which represent acceptable QoS boundaries then a SLA (Service Level Agreement) may be breached. In order for the flow of data through each of the network segments to be managed it is necessary to provide segment-specific QoS parameters to the management modules 300 associated with each of the segments in the route. These parameters, $Pa$, represent the limits to the various QoS parameters that apply to the transmission of data for the local segment a for that service session. This can be expressed as "per router or per link, this service can tolerate x seconds of delay, y seconds of loss and z seconds of jitter given that the service flow traverses a range of m - n routers in total from source to destination".

These QoS parameters can be defined centrally, obtained using operator expertise, or derived periodically by the segment management module on a per flow or per service category basis depending on the proportion of links/ routers that the service traverses in that segment compared to the end-to-end distance. The overall QoS thresholds for each segment can be derived from this ratio, based on the size of the segment in comparison to the end-to-end chain.

Regardless of the manner in which this information is obtained, the QoS parameters are either communicated directly to each of the segment management modules or are held in a separate network management database 305. Each of the segment management modules are in communication with the network management database 305 such the network management database can be queried by a segment management module and the associated segment QoS parameters are returned to the management module. As a result, each of the segment management modules will have, for a given service flowing through the network, an array $P_a$ that states the maximum allowable QoS parameters for that particular segment in order that the overall QoS satisfies the SLA.

In order to be able to monitor these parameters in real time it is necessary to translate them into one or more parameters that are easily accessible from the routers 210 that are present in the different network segments. For example, it is possible to access, OR COMPUTE, a wide range of local router parameters from the Management Information Base (MIB). These parameters can include, without limitation, ingress/egress buffer availability, router response time, router on/off status, link capacity, rate of ingress and egress traffic flows (the ratios of these flows to buffer occupancy as well as the trend of this over time), and packets discarded on the ingress/egress due to various faults (e.g. buffer overflow, software errors).

Put more formally, it is necessary to express $P_a$ in the generic form

$$P_a = f(\text{d, e, f, g}) \qquad\qquad [2]$$

and to determine the function $f$ and the parameters d, e, f & g which are equivalent to $P_a$. It is known to perform such translations using either linear regression or if necessary a non-linear regression technique such as, for example, a multi-layer perceptron. It will be understood that linear regression is easier to implement and should provide sufficient accuracy. It should also be understood that if suitable router parameters can be found from another source, such as from an aggregator entity (as described below) or another protocol or set of flooded LSAs that have already been implemented to collect such network performance data, then it is possible to use this alternative source of parameters to determine the equivalent expression of $P_a$. Similarly, an alternative method of translating the router parameters in order to determine $P_a$ could be used.

Thus it is possible to monitor a selected subset of parameters that directly reflect the operational performance of each of the routers in the network segments of interest and use this information in order to determine the value of $P_a$ in real time. Once the values of $P_a$ are determined for each network segment then it is possible to use this data to predict when the performance of the network is likely to lead to the SLA being breached, either when considering one or more segments in the network, or an end-to-end network path. The output required from the network as a result of this step is a "near real-time progress report" of the performance of every individual, or class of, service flow in the network.

The actual values of the required router parameters may be obtained by each of the segment management modules periodically polling each of the routers that are comprised within their respective network segments. Alternatively, each of the routers may 'push' the required router data to the segment management modules on a periodic basis or as and when parameter values change. Alternatively, one could implement an aggregator entity 310, which performs the mapping function $f$ and passes the instantaneous QoS matrix it calculates from all its router sources to the segment management module, which then makes predictions based on this QoS data.

Once the performance data has been collected then it will be understood that predictions of potential underperformance can be made in a number of different known ways. One of the simplest methods is to use trend analysis. For example, if the buffer occupancy has increased over the past $n$ periods, then it is likely that delays in the router will increase and therefore exceed the acceptable local threshold after the next $m$ periods. Alternatively, if the number of packets discarded from a UDP voice call flow increases over $n$ periods, then it is likely that the loss of packets will exceed acceptable thresholds after $m$ periods if the same trend continues. In addition to this, it is possible to use association rule mining that learns from historical data. This could lead to rules such as

"if parameters {d, e, f, g} maintain values {$d_a$, $e_a$, $f_a$, $g_a$}, then the QoS parameters $P_a$ are likely to be exceeded within the next $m$ time periods".

Such rules can then be used in real-time by the segment management modules. Association rule mining is a known technique and there are several known learning methods (for example, decision and regression trees or neural networks, see T Mitchell, "Machine Learning", McGraw-Hill Science/Engineering/Math, 1st edition, 1997) that could be used to make these predictions and to map these predictions to specific parameter values in the form {$d_a$, $e_a$, $f_a$, $g_a$}. The segment management modules compares the real-time parameter inputs it receives from its routers to the criteria required by these predictions. This can be done by comparing the rules stored in a database to the incoming parameters and automatically triggering a subsequent action when a rule is fulfilled. It will be understood that this can be done according to class of service or on a per flow basis. This distinction might be necessitated by various services from different providers requiring different SLAs and QoS parameters, therefore leading to different rules for each class of service and/or flow.

If such a rule is triggered then it will be understood that the consequent action to be performed could take one or more of a large range of actions in order to prevent network congestion building up at one or more particular routers on along one or more communications links within a given network segment. It is thought that one appropriate response is to spread data across the network segment, based upon historical knowledge of how much data that other currently available communications links in that segment can tolerate whilst still being able to sustain the locally assigned SLA. It will be understood that all of the traffic being transmitted over that link may be re-distributed, or alternatively just a fraction of the data can be re-distributed. A further advantage of such a re-assignment of some or all of the traffic from an underperforming link is that the reduction of the load on that link should provide an opportunity for the performance of that link to recover and to minimise the effect of its underperformance until a recovery has been effected.

For example, if there are two possible routes to a destination and the primary route is reaching capacity, such that it is likely to lead to congestion, then sending a certain percentage of traffic via the secondary route, even if it is not be able to take 100% of the primary route's traffic, is likely to be better than keeping the primary route fully occupied.

This re-routing of some or all of the data can be achieved either using link information from IP routing tables and/or using other rules learnt from historical performance of the communications links in the network segment. In one such method, the segment management module will poll the router that is upstream of the most underperforming routers in order to learn about the next best hop to replace the suffering link. It is recommended to poll the router that precedes the suffering link as it is likely that this has the most up-to-date information about its next best hops. Should the polling cause too much overload on the router itself, one could poll any router nearby (not necessarily only upstream) if a link-state protocol such as OSPF is being implemented at the IP layer. In the case of distance vector protocols such as BGP or RIP, it is necessary to poll the router preceding the suffering link because no other router will actually have the required next best hop information.

The next best hop may be within the same network segment or it may be in a different network segment. If it is in the same network segment, then a rule repository about the prior performance of the next hop link can be consulted to decide how much of the data can be offloaded onto the new link, given the current occupancy and expected performance of the proposed next hop. Alternatively, the data distribution can be done randomly across all the links that could be used to carry that particular service. In a further alternative, the traffic may be distributed evenly across some or all of the available links, or the traffic may be distributed in a manner which is proportional to the available capacity on these links.

If such a rule regarding the prior performance of new next hop does not exist in the rules repository, then the decision as to whether to re-route traffic over this hop will be made based only on the current loading of the next hop and the services that are being transported over it.

Once the decision to re-route traffic has been made then it will be logged by the network segment management module, so that the effect of the re-routing can be stored and this historical performance data may then be used when making subsequent decisions regarding the re-routing of traffic.

In the case where the next hop is located within the same network segment as the suffering link, once it has been decided how much data to re-route, and the next hop(s) over which it is to be re-routed, then it is necessary to implement a mechanism for that distributes the re-routed traffic onto the new next hop(s). For some cases, it may be appropriate to decided to offload all the data from an overloaded link if it is predicted that the link will fail entirely within a predicted timeframe (see, for example, the Applicant's co-pending application EP10250540). This may be achieved, for example by increasing the link cost parameter, which is held in the MIB, thus releasing the link entirely from the network.

However, it may not possible to take such a course of action if one or more streams of data require redirection over different communications links, whilst other data streams are unaffected. In such a case, one way to effect this change is by altering the MPLS labelling. This is possible since MPLS is a flow-oriented mechanism which labels packets according to their class and it routes them accordingly, to deliver the required QoS as defined by the SLA. Other load-balancing techniques for redirecting a portion of the traffic onto other communications links are well known, and it will be understood by those skilled in the art that they do not form a part of the present invention. For example, protocols that facilitate such load balancing are Equal Cost Multipath Routing (ECMP) and OSPF Optimised Multipath (OSPF-OMP). It will be understood that other multipath routing applications and protocols are known.

The real-time performance monitoring and management techniques provided by the present invention are of importance not only in UDP traffic, because there is no retransmission of data or TCP-like congestion control, but also in TCP traffic to ensure that packet delay, packet loss and other multiple end-to-end QoS parameters which affect the quality of experience for network users are kept under the maximum allowable targets before the TCP congestion control mechanisms kick in and reduce the service flow on the network.

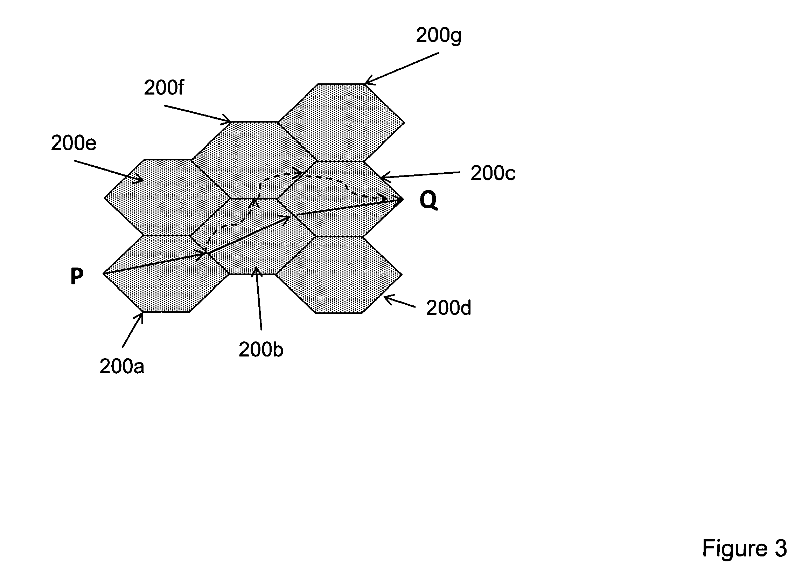

It will be understood that it may be necessary to implement a re-routing which involves the data passing through network segments that were not previously carrying the data. Referring to Figure 3, which shows a schematic depiction of a segmented network which comprises network segments 200a, 200b, ... 200f, each of which has a uniquely associated segment management module (not shown in Figure 3). A route from end-point P to end-point Q is shown with solid arrows as passing from network segment 200a to network segment 200c via network segment 200b. If it is predicted that it is likely that there will be congestion on the communications links within segment 200b that are carrying data from end-points P-Q then it may be possible for this data to be re-routed within segment 200b (as discussed above) and the data delivered to segment 200c before being routed on to end-point Q. However, for example, if such a re-routing were not to be possible then it might be necessary to route the data across network segment 200b to network segment 200f; across network segment 200f to network segment 200c; and then across network segment 200c to end-point Q.

When traffic needs to be re-routed it is necessary to determine whether a target segment has the necessary privileges to carry the data that is to be re-routed via that segment. If sensitive data is being transmitted then this may limit those network segments that can be used when re-routing the data. A request to re-route sensitive data may cause a segment management module to activate encryption or other security measures within the segment (or just for those routers and communications links that would be needed to transmit the data across the segment).

Once it has been determined that a segment is permitted to allow the data to be re-routed through it, then it is necessary to determine whether the segment has sufficient capacity to transmit the data whilst still providing the necessary QoS. The management module of a target segment will know the present performance of each of the elements within the segment, so when receiving a request from another segment it will be able to determine if it can satisfy the request. If it can satisfy the request in its entirety, then it will send a confirmation message to the management module which generated the request and the data will be re-routed appropriately. It may be that the segment management module which initiates the re-routing of data is responsible for arranging all the re-routings that are required to deliver the data to its destination. Such an approach means that a complete route through the network can be determined prior to the re-routing of the data but it does mean that the overhead of negotiating the re-routings will fall upon a single management module. In an alternative, once data has been re-routed to a different segment, the management module of that segment can become responsible for the next re-routing of the data (if required). This approach reduces the overhead that falls upon any single management module.

In the event that a network segment is only able to partially satisfy a request for re-routing, based on its expected segment performance in the near future, then the response to the management module which generated the request will indicate what portion of the request it is able to meet. The requesting management module may either accept the partial offer and attempt to re-route the remainder of the data over a different route, or it may reject the partial offer and then re-route the data over a different route. If the response is that the management module is not able to satisfy the request then the requesting management module will attempt to re-route the data over a further route.

If it transpires that it is not possible to determine a suitable re-routing of the data before a timeout period expires then an alarm can be raised that network performance is about to degrade and that a local fix has not been possible. The value of the timeout should be related to the original prediction period until the SLA breach was anticipated to occur. Alternatively, or in combination, the alarm could be raised based on a maximum number of attempts to re-route the data.

It should be noted that all actions that are taken with respect to data re-routing should be stored in the databases of the respective network segment management modules such that learning algorithms cab use this data when determining subsequent data re-routings. For example, recording a decision with its timestamp, and correlating subsequent changes in the QoS performance of a given link can be used to learn about its historical performance for the next decision.

A method according to the present invention will now be described in greater detail. Assuming that the QoS parameters of interest are throughput (T), loss (L), and delay (D), then

$$P_a = \{T,L,D\} \qquad\qquad [3]$$

.

As described above, it is possible to determine $P_a$ based on one or more operational parameters derived from the routers and/or communications links that are comprised within a network element. In the present case it is assumed that an analysis of network parameter data shows that $P_a$ depends on the ratio of sent (s) and received (r) packets across a communications link and we therefore monitor the change of this ratio at time t:

$$d_{sr}^t = \frac{s_t - s_{t-1}}{r_t - r_{t-1}} \qquad\qquad [4]$$

it is also assumed that the QoS at time t+1 can be computed based on the monitored $d_{sr}^t$, for example by way of linear regression. It should be understood that instead of linear regression any other form of regression (for example non-linear, neural networks etc.) could be used. Thus, we have:

$$T_{t+1} = f(d_{sr}^t) = a d_{sr}^t + b \qquad\qquad [5]$$

$$L_{t+1} = g(d_{sr}^t) = c d_{sr}^t + d \qquad\qquad [6]$$

and

$$D_{t+1} = h(d_{sr}^t) = ed_{sr}^t + f \qquad\qquad [7]$$

The maximum acceptable limits of throughput, loss and delay can be defined using thresholds $\theta_T$, $\theta_L$ and $\theta_D$ respectively, after which service degradation will occur. Therefore if $T_{t+1} > \theta_T$ or $L_{t+1} > \theta_L$ or $D_{t+1} > \theta_D$ holds, then a QoS deterioration is likely to occur at t+1 and corrective action must be triggered.

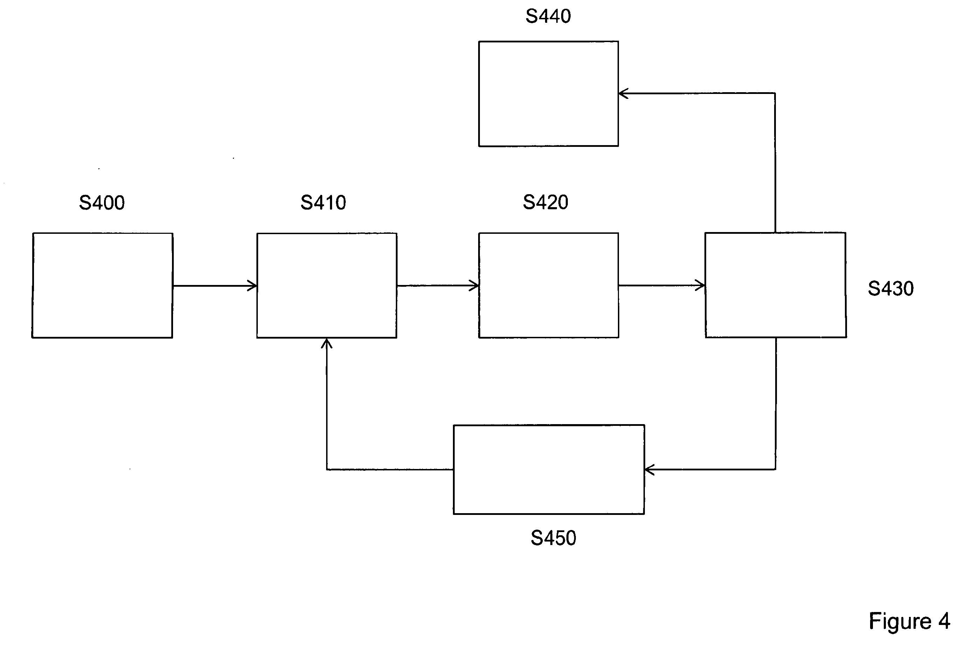

Such corrective action will now be described with reference to the flowchart which is depicted schematically in Figure 4. At step S400 the particular communications link which is predicted to suffer service degradation (see above) for one or more of the services being carried over the link is identified. At step S410 it is determined how what proportion of the service is to be re-routed over a different communications link. For the sake of simplicity, it is preferred to start by trying to re-route all of the service over one other communications route. At step S420 the router that precedes the link identified in step S400 is polled to determine a set of possible next best hops that can be used to divert load away from the suffering link and the first next best hop which is returned in response to the polling is selected.

It is assumed that a next hop structure is defined for each network segment and that historical performance data for each hop in this structure is stored within a database held by the management module for each of the network segments. Table 1 below shows an example of the type of data held within such a database:

Table 1: Exemplary next hop performance data

| $T_{t+1}$ | $L_{t+1}$ | $D_{t+1}$ | Request at time t | Success rate |
|---|---|---|---|---|
| 10Mb/s | 2% | 20ms | $T = 5Mb/s$, $L_{t+1} = 2\%$, $D_{t+1} = 20ms$ | 80% |
| 10Mb/s | 2% | 20ms | $T = 7Mb/s$, $L_{t+1} = 2\%$, $D_{t+1} = 20ms$ | 50% |
| 10Mb/s | 2% | 20ms | $T = 12Mb/s$, $L_{t+1} = 2\%$, $D_{t+1} = 20ms$ | 0% |
| | ... | ... | ... | ... |

At step S430 the historical performance data for the next hop selected at step S420 (see above) can then be examined to determine if it is able to accept the re-routed data at the maximum bit-rate and without breaching the specified threshold values for both loss and delay. If the selected next hop can meet these requirements with an acceptable predicted success rate, for example greater than 80% then at step S440 the MPLS table is updated so that the label of the suffering link is replaced with the label of the next best hop. Furthermore, if it is necessary to make consequential re-routings further downstream then it will be necessary to amend the labels of subsequent routers. For example, if route A-B-C is changed to A-D-C, then the MPLS tables of routers A and D have to be changed so that the data is routed back to router C. Once the MPLS tables have been updated in accordance with the re-routing of the data then the process terminates at step S440.

If at S430 it is not possible to re-route the data to the next hop selected at step S420 at the maximum bit-rate, or if the predicted success rate for the re-routed data is below a threshold value, then the process returns to step 410 where a proportion of the traffic will be selected and then assigned to a next hop which is able to support that traffic without breaching the threshold values and whilst having an acceptable predicted success rate. This scheduling of a proportion of the traffic to be re-routed will be repeated until all of the traffic has been re-routed through the network segment. The desired data apportioning can be implemented by changing the weighting factors of the multipath routing scheduling algorithms that are used by the routers (see, for example, C Villamizar, "*OSPF Optimized Multipath (OSPF-OMP)*", Internet-Draft, IETF http://tools.ietf.org/html/draft-ietf-ospf-omp-02). If it is not possible to apportion the all of the traffic to be re-routed due to insufficient information in the historical performance data tables, then it is possible to use heuristics to distribute the remaining load equally across the available next best hops. For example, it is possible to use an approach such as Equal Cost Multipath (J. Moy, *'OSPF Version 2'*, RFC 2328, Section 2.4, http://www.rfc-editor.org/rfc/rfc2328.txt and C. Hopps, *'Analysis of an Equal-Cost MultiPath Algorithm',* RFC 2992, http://tools.ietf.org/html/rfc2992). For all of the requests for the re-routing of data the request will be recorded, whether or not the request was successfully completed, and the history tables will be updated accordingly.

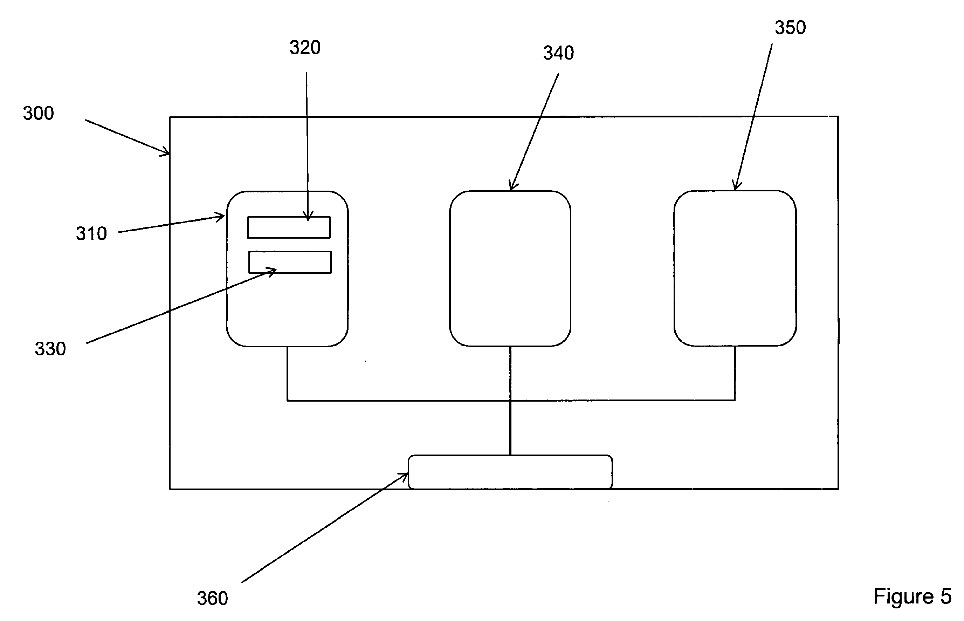

As will be understood from the above discussion, each of the network segment management modules performs three functions: the collection of data from each of the network elements comprised within the associated network segment; the prediction of possible network performance degradation, based upon current performance data and trends learned from historically collected data; and re-routing data based on the prediction of network performance degradation. Figure 5 shows a schematic depiction of a network segment management module 300 which comprises non-volatile data storage means 310, such as a hard disk drive or non-volatile memory modules, the non-volatile data storage means storing one or more software applications 320 for performing the above functions, operating system 330, volatile data storage means 340, such as RAM modules, and a central processor unit (CPU) 350. The non-volatile data storage means, volatile data storage means and the CPU are interconnected and are also in communication with network interface 360. In operation, the operating system and one or more of the software applications will be loaded into the volatile data storage means and are executed by the CPU. If data is to be transmitted to, or received from, the network segment then it will be routed via the network interface. It will be understood that the management module is effectively a general purpose computing device which incorporates the one or more software applications 520 that are required to provide the functionality of the present invention.

As discussed previously, each of the network segments has its own management module. A segment management module may be implemented on a dedicated hardware apparatus. In an alternative, one of the routers in a network segment may have sufficient storage and processing capacity to be able to execute the software application(s) which provide the functionality of a network segment management module in addition to the conventional router functionality. Referring to Figure 2, one or more of the network segments may further comprise an aggregator 230 which may receive operational parameters from the routers within a network segment. These parameters may then be forwarded to the segment management module in order that the likelihood of any future network deteriorate can be determined. In a further alternative, the aggregator may calculate the QoS parameters based on the operational parameters received from the routers and pass these on to the segment management module which can then decide what traffic, if any, requires re-routing. Similarly, to the segment management module it is possible for the aggregator to comprise a dedicated apparatus that executes the required software, or the software may be implemented by a router, or other network element which is also performing some other conventional functionality.

As will be understood from the preceding discussion of the present invention, it is necessary to sub-divide the network into a plurality of segments. It will be appreciated that there are no definitive limits to the size of a network segment. It is thought appropriate to apportion the network into segments according to the geographical distribution of routers in the network. The maximum size of a segment, in the sense of the number of routers within an individual segment, is likely to be limited by the difficulty of managing a segment. As the number of routers in a segment increases then it will take longer for the management module to collect network performance data (either from the routers or an aggregator), determine which network elements, if any, may soon be under performing and then initiating any re-routing as required. By using dedicated hardware to implement a segment management module then this may enable larger segments to be defined within a given network, when compared to implementing a segment management module on a router (or other similar network element). In a variant of the present invention, multiple management modules may be provided in a network segment, with one management module being dedicated to a particular class of service. Each class of service may have their own dedicated management module or it may be preferred to assign one management module to a each of number of classes of service and to have a further management module for all of the other classes of service.

In summary, the present invention provides a communications network which is divided into a plurality of segments, with each segment comprising one or more routers and one or more communications links that connect the routers. Quality of service (QoS) thresholds can be defined for each of the segments and if it is predicted that one of these thresholds is to be breached in one of the segments, for example due to a communications link or a router being overloaded, then a segment management module associated with that segment will re-route the traffic.

It will be understood that some aspects of the present invention, for example the segment management module, amongst others, may be implemented by executing computer code on a general purpose computing apparatus. It should be understood that the structure of the general purpose computing apparatus is not critical as long as it is capable of executing the computer code which performs a method according to the present invention. Such computer code may be deployed to such a general purpose computing apparatus via download, for example via the internet, or on some physical media, for example, DVD, CD-ROM, USB memory stick, etc.

**Claims**

1. A communications network, the communications network being partitioned into a plurality of network segments, each of the plurality of the network segments comprising a segment management module, a plurality of network elements and a plurality of communications links, the plurality of network elements being interconnected by the plurality of communications links, the network being configured such that, in operation:

    i) each of the segment management modules receives operational data from the plurality of network elements in its respective network segment;
    ii) on the basis of operational data received from the plurality of network elements, each segment management module determines the future performance of the plurality of network elements in the respective network segment; and

iii) if a segment management module determines that the future performance of one or more of the plurality of network elements in the respective network segment will be less than a threshold value, re-routing one or more data flows.

2. A network according to Claim 1, wherein in step iii), the segment management module, in operation, determines that future performance of one of the plurality of communications links will be less than a threshold value.

3. A network according to Claim 2, wherein the segment management module, in operation, polls a router preceding the communications link which was determined to have an inadequate performance to determine one or more alternative communications links over which one or more data flows may be routed.

4. A network according to any of claims 1 to 3, wherein in step iii), the segment management module, in operation, re-routes one or more data flows within the network segment associated with that segment management module.

5. A network according to any of claims 1 to 3, wherein in step iii), the segment management module, in operation, re-routes one or more data flows to one or more further network segments.

6. A network according to any preceding claim, wherein the threshold value for the predicted performance of a network element is derived from one or more quality of service values.

7. A method of operating a communications network, wherein the communications network is partitioned into a plurality of network segments, each of the plurality of the network segments comprising a segment management module, a plurality of network elements and a plurality of communications links, the plurality of network elements being interconnected by the plurality of communications links, the method comprising the steps of:

i) each of the segment management modules receiving operational data from the plurality of network elements in its respective network segment;
ii) each segment management module determining, on the basis of operational data received from the plurality of network elements, the future performance of the plurality of network elements in the respective network segment; and
iii) if a segment management module determines that the future performance of one or more of the plurality of network elements in the respective network segment will be less than a threshold value, re-routing one or more data flows.

8. A data carrier device comprising computer executable code for performing a method according to Claim 7.

EP 2 469 758 A1

305

300

A

B

200

100

Figure 1

Figure 2

Figure 3

Figure 4

EP 2 469 758 A1

Figure 5

# EP 2 469 758 A1

Europäisches Patentamt
European Patent Office
Office européen des brevets

## EUROPEAN SEARCH REPORT

Application Number

EP 10 25 2233

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2004/098457 A1 (BETGE-BREZETZ STEPHANE [FR] ET AL) 20 May 2004 (2004-05-20) <br> * paragraph [0028] - paragraph [0054] * <br> * paragraph [0062] - paragraph [0075] * <br> ----- | 1-8 | INV. <br> H04L12/24 <br> H04L12/56 |
| Y | ANJALI T ET AL: "A new scheme for traffic estimation and resource allocation for bandwidth brokers", <br> COMPUTER NETWORKS, ELSEVIER SCIENCE PUBLISHERS B.V., AMSTERDAM, NL, <br> vol. 41, no. 6, 22 April 2003 (2003-04-22) , pages 761-777, XP004414298, <br> ISSN: 1389-1286, DOI: <br> DOI:10.1016/S1389-1286(02)00438-3 <br> * page 761, paragraph 1 - page 764, paragraph 2 * <br> ----- | 1-8 | |
| A | US 2007/121509 A1 (TAYLOR MICHAEL [US] ET AL) 31 May 2007 (2007-05-31) <br> * paragraph [0006]; figure 1 * <br> * paragraph [0009] - paragraph [0012]; figure 2 * <br> ----- | 1-8 | TECHNICAL FIELDS SEARCHED (IPC) <br> H04L |
| A | AWDUCHE J MALCOLM J AGOGBUA M O'DELL J MCMANUS UUNET (MCI WORLDCOM) D: "Requirements for Traffic Engineering Over MPLS; rfc2702.txt", <br> IETF STANDARD, INTERNET ENGINEERING TASK FORCE, IETF, CH, <br> 1 September 1999 (1999-09-01), <br> XP015008485, <br> ISSN: 0000-0003 <br> * abstract * <br> * paragraph [02.2] * <br> ----- | 1-8 | |

The present search report has been drawn up for all claims

| Place of search | Date of completion of the search | Examiner |
|---|---|---|
| The Hague | 29 June 2011 | Peeters, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

# EP 2 469 758 A1

## ANNEX TO THE EUROPEAN SEARCH REPORT
## ON EUROPEAN PATENT APPLICATION NO.

EP 10 25 2233

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2011

| Patent document cited in search report | | Publication date | Patent family member(s) | | Publication date |
|---|---|---|---|---|---|
| US 2004098457 | A1 | 20-05-2004 | AT | 385093 T | 15-02-2008 |
| | | | CN | 1498481 A | 19-05-2004 |
| | | | DE | 60224775 T2 | 12-02-2009 |
| | | | EP | 1326374 A1 | 09-07-2003 |
| | | | FR | 2834409 A1 | 04-07-2003 |
| | | | WO | 03061198 A1 | 24-07-2003 |
| | | | JP | 2005515703 A | 26-05-2005 |
| US 2007121509 | A1 | 31-05-2007 | NONE | | |

EPO FORM P0459

For more details about this annex : see Official Journal of the European Patent Office, No. 12/82

16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 10250540 A


**Non-patent literature cited in the description**

- **T MITCHELL.** Machine Learning. McGraw-Hill Science/Engineering/Math, 1997